# EUROPÄISCHE PATENTSCHRIFT

(11) **EP 1 722 930 B1**
(45) Veröffentlichungstag und Bekanntmachung des Hinweises auf die Patenterteilung: **25.05.2011**
(21) Anmeldenummer: 04802816.1
(22) Anmeldetag: 24.11.2004
(51) Int. Cl.: B25B 27/02, B60B 27/00

(54) **VERFAHREN UND MONTAGEVORRICHTUNG ZUM HERSTELLEN EINER DREHVERBINDUNG**
METHOD AND ASSEMBLY DEVICE FOR PRODUCING A ROTARY JOINT
PROCEDE ET DISPOSITIF DE MONTAGE POUR PRODUIRE UN RACCORD TOURNANT

(30) Priorität: 28.11.2003 DE 10355684
(43) Veröffentlichungstag der Anmeldung: 22.11.2006
(73) Patentinhaber: Schaeffler Technologies GmbH & Co. KG, 91074 Herzogenaurach (DE)
(72) Erfinder: BREITENBACH, Rainer, 97469 Gochsheim (DE); KÖNIGER, Florian, 97422 Schweinfurt (DE); NIEBLING, Peter, 97688 Bad Kissingen (DE)
(86) Internationale Anmeldenummer: PCT/DE2004/002607
(87) Internationale Veröffentlichungsnummer: WO 2005/051604

(56) Entgegenhaltungen:
- DE-A1- 1 806 566
- GB-A- 2 171 040
- GB-A- 2 301 548
- US-A- 4 433 877

## Beschreibung

### Gebiet der Erfindung

Die Erfindung betrifft ein Verfahren, eine Montagevorrichtung und eine Mutter zum Herstellen einer Drehverbindung zwischen einem Antriebselement und einem Flansch, bei dem das Antriebselement und der Flansch zumindest durch die Mutter und durch einen Bolzen des Antriebselementes zumindest solange miteinander verschraubt werden, bis der Bolzen durch Drehen der Mutter axial in ein Loch des Flansches bis in eine Endstellung des Antriebselementes zu dem Flansch hineingezogen ist.

### Hintergrund der Erfindung

In DE 195 43 436 C2 ist eine Schraubverbindung für angetriebene Räder von Kraftfahrzeugen beschrieben. Die Schraubverbindung verbindet einen Radflansch mit einem Antriebselement, z. B. mit einer Gelenkglocke einer Antriebswelle, des Fahrzeuges. Mit dieser Verbindung wird eine drehfeste und somit Drehmomente von dem Antriebselement auf den Radflansch übertragende Verbindung hergestellt. Der Radflansch ist fahrzeugseitig fest und nimmt eine Lagerung für ein Fahrzeugrad auf.

Durch den Flansch erstreckt sich axial ein Durchgangsloch. In das Durchgangsloch wird eine bolzenartige Verlängerung des Antriebselementes eingeführt und mittels der Verschraubung mit dem Radflansch drehfest verbunden sowie axial an diesem gesichert. Die Drehverbindung ist alternativ durch Pressverbindungen, formschlüssige Verbindungen oder vorzugsweise eine Kombination aus Press- und Formschlussverbindungen hergestellt. Durch die Verbindungen sind in Umfangsrichtung um die Längsmittelachse des Radflansches vom Antriebselement zum Flansch und umgekehrt Drehmomente übertragbar. Die Verbindung soll absolut spielfrei sein.

Die Schraubverbindung ist hoch belastet. Zum einen sind mit der Schraubverbindung, je nach Ausführung des Lagers, zunächst Anstellkräfte für ein spielfreies Lager zu erzeugen und zum anderen ist die Drehverbindung und die axiale Halterung des Antriebselementes am Flansch abzusichern.

Bei der Montage des Antriebselementes in den Flansch wird zunächst der Bolzen des Antriebselementes in die Bohrung des Flansches soweit eingeführt, dass ein Gewinde am freien Ende des Bolzens auf der anderen Seite des Loches hervorsteht. Auf dieses Gewinde wird dann eine Mutter zu einer losen Schraubverbindung mit dem Bolzen aufgeschraubt, bis die Mutter sich axial am Flansch abstützt.

Dann wird die Mutter festgezogen. Dabei müssen durch Drehen der Mutter Widerstände am Bolzen gegen das Einziehen des Antriebselementes in eine Pressverbindung überwunden werden. Diese Widerstände entstehen durch Überdeckungen zwischen der bolzenartigen Verlängerung des Antriebselementes und dem Loch im Flansch. Beispiele für derartige Formschluss-Pressverbindungen sind Paarungen von Längsverzahnungen innen im Loch des Flansches mit Längsverzahnungen außen am Bolzen, die durch Presspassungen in den Zahnpaarungen zusätzlich gesichert bzw. spielfrei gestellt sind. Beim Einziehen des Antriebselementes in den Flansch stützt sich deshalb die Mutter axial an einer Stützfläche des Flansches ab.

Die axialen Widerstände aus der Pressverbindung werden durch hohe Anzugmomente an der Mutter überwunden. Zwischen der Mutter und der Stützfläche entstehen aufgrund der großen Anzugsmomente hohe Reibmomente. Deshalb ist die Höhe der mit einer Montagevorrichtung auf die Mutter aufzubringenden Anzugsmomente zum einen von der Höhe der axialen Widerstände gegen das Einziehen und zum anderen durch die Reibverhältnisse zwischen Mutter und Führungsfläche zuzüglich der Reibung in der Gewindepaarung bestimmt.

Die Höhe dieser Anzugsmomente ist schwer abschätzbar, da diese Kräfte durch verschiedene Einflussfaktoren, wie fertigungsbedingte Toleranzen in den Paarungen und Pressverbindungen sowie durch unterschiedlich hohe Reibverluste bestimmt sind. Das Anzugsmoment, das erforderlich ist, um diese Widerstände zu überwinden, kann sich in der Größenordnung eines Soll-Anzugsmomentes bewegen, dass erforderlich ist, um die Einheit wirkungsvoll axial zu verspannen. Es kann deshalb oft nicht unterschieden werden, ob das beim Verschrauben direkt oder indirekt gemessene Anzugsmoment an der Mutter durch die schwer kalkulierbaren axialen Widerstände oder durch ausreichende axiale Vorspannung der Verbindung und des Lagers erzielt wurde.

Da die Schraubwerkzeuge in der Regel beim Erreichen des Sollwertes dieses Anzugsmomentes abschalten, führt dies in der Praxis häufig dazu, dass das Lager oder die Drehverbindung zu wenig vorgespannt ist. Das führt zur Lockerung der Schraubverbindung, zu unzulässigem Spiel in der Radlagerung und/oder zu Mikrobewegungen zwischen dem Antriebselement und dem Flansch. Durch diese Mikrobewegungen entstehen Geräusche und Verschleiß. Durch den Verschleiß entstehen u.U. Kerben in dem Antriebselement, die zum Bruch des Antriebselementes führen können.

Die US 4,433,877 beschreibt eine Lageranordnung für ein angetriebenes Rad eines Fahrzeugs. Dabei wird hauptsächlich die Problematik des Wälzlagers an der Radbefestigung diskutiert, wobei bei einem einteiligen, die innere Lagerschale tragenden und unmittelbar mit einem Antriebsbolzen verbundenen Flansch eine sehr genaue Ausrichtung erforderlich ist und im Zusammenbau das Einfügen der Wälzkörper erschwert ist. Daher ist dort ein Befestigungsring zur drehfesten Kopplung des Bolzens an das Bauteil mit der inneren Lagerschale vorgesehen. Zur Befestigung des Bolzens ist auf einem mit einer Windung versehenen Ende eine Mutter aufgeschraubt, die mit einem Hinterschnitt versehen ist.

### Zusammenfassung der Erfindung

Die Aufgabe der Erfindung ist es daher, ein Verfahren, eine Montagevorrichtung sowie eine für die Montagevorrichtung und das Verfahren geeignete Mutter zu schaffen, mit denen die vorher genannten Nachteile vermieden werden.

Diese Aufgabe ist mit dem Gegenstand des Anspruches 1, weiterer unabhängiger Ansprüche und mit den abhängigen Ansprüchen gelöst.

Das Verfahren dient zum Herstellen einer Drehverbindung zwischen einem Antriebselement und einem Flansch. Das Antriebselement, vorzugsweise die Glocke einer Gelenkwelle eines Radantriebes, wird mittels eines zum Antriebselement separaten Bolzens oder einer einteilig mit dem Antriebselement ausgebildeten bolzenartigen Verlängerung in das Durchgangsloch des Flansches eingeführt und eingepresst. Das Durchgangsloch, in der Regel mit einer Längsverzahnung versehen, erstreckt sich rotationssymmetrisch zu der Längsmittelachse und somit Rotationsachse des Flansches.

Unter Längsverzahnung und Zahnpaarungen sind alle Elemente, also auch Keilverzahnungen, Helix-Verzahnungen und andere Keil-Nut-Verbindungen zu verstehen, die geeignet sind, um die Rotationsachse des Flansches zwischen dem Antriebselement und dem Flansch oder umgekehrt Drehmomente zu übertragen. Die Erfindung lässt sich auch beim Herstellen aller weiteren denkbarenform- oder form-kraftschlüssigen Verbindungen wie Konusverbindungen oder Presspaarungen in zylindrischen Bohrungen anwenden.

Unter Bolzen sind alle rotations-symmetrischen bzw. annähernd rotationssymmetrisch ausgebildeten Verbindungselemente zu verstehen, die geeignet sind, eine Welle-Nabeverbindung zwischen dem Antriebselement und der Nabe herzustellen. Das sind z. B. die anfangs schon erwähnten separaten Schraubbolzen und bolzenartigen und einteilig mit dem Antriebselement ausgebildeten Ansätze am Antriebselement.

Die Bolzen weisen vorzugsweise eine mit einer Innenverzahnung im Loch des Flansches funktionell bzw. formschlüssig korrespondierende Außenverzahnung auf und sind an ihre freien Ende mit einem Gewinde versehen. Das Gewinde ist dabei entweder ein Innengewinde oder vorzugsweise ein Außengewinde.

Die Mutter, in allen für die Anwendung denkbaren Ausführungen, weist ein mit dem Gewinde am Bolzen korrespondierendes Gegengewinde auf und ist außerdem gemäß Erfindung an einem Abschnitt axial aus Richtung des Flansches hinterschnitten. Der/die Hinterschnitt(e) ist/sind so gestaltet, dass die Mutter axial hintergriffen und während des Verschraubens der Schraubverbindung Bolzen-Mutter axial zu dem Flansch beabstandet gehalten werden kann. Dazu weist die Mutter, vorzugsweise außen, wenigstens eine radiale Vertiefung auf, in die entsprechende Klemmelemente eines Montageswerkzeuges eingreifen können. Derartige radiale Vertiefungen sind vorzugsweise am Innenumfang bzw. am Außenumfang der Mutter eingebrachte Radialnuten. Denkbar ist auch, dass die Außenmantelfläche einer derartigen Mutter für eine lösbare Klemmverbindung konisch bzw. als die Fläche eines Pyramidenstumpfes ausgeführt ist.

Die Verfahrensschritte sind:
- Einführen des Bolzens in das Durchgangsloch des Flansches von einer der Seiten des Flansches aus. - Dabei wird der Bolzen bzw. die bolzenartige Verlängerung am Antriebselement soweit axial in das Loch hineingeführt, bis an dem anderen Ende des Loches eine lockere Schraubverbindung zwischen dem Gewinde an dem Bolzen und dem Gegengewinde der Mutter herstellbar ist. Dazu steht entweder zumindest ein Teil des Gewindes des Bolzens frei aus dem Loch heraus oder die Mutter taucht mit dem Gegengewinde zum Anfädeln auf das Gewinde des Bolzens in das Loch hinein.
- Aufsetzen und Drehen der Mutter auf den Bolzen bis eine ausreichende Anzahl von Gewindegängen der Schraubverbindung trägt,
- Verschrauben der Mutter mit dem Bolzen durch Drehen der Mutter. - Dabei wird die Mutter mittels einer Vorrichtung axial beabstandet zu dem Flansch zumindest so lange gehalten, bis das Antriebselement durch Drehen der Mutter in der Endposition steht.
- Lösen der Mutter von der axialen Rückhaltesicherung
- Verschrauben der Mutter bis zur Anlage an den Flansch mit dem Bolzen
- Verspannen der Mutter durch Drehen der Mutter mit definierten Anzugsmomenten gegen den Flansch.

### Beschreibung der Zeichnungen

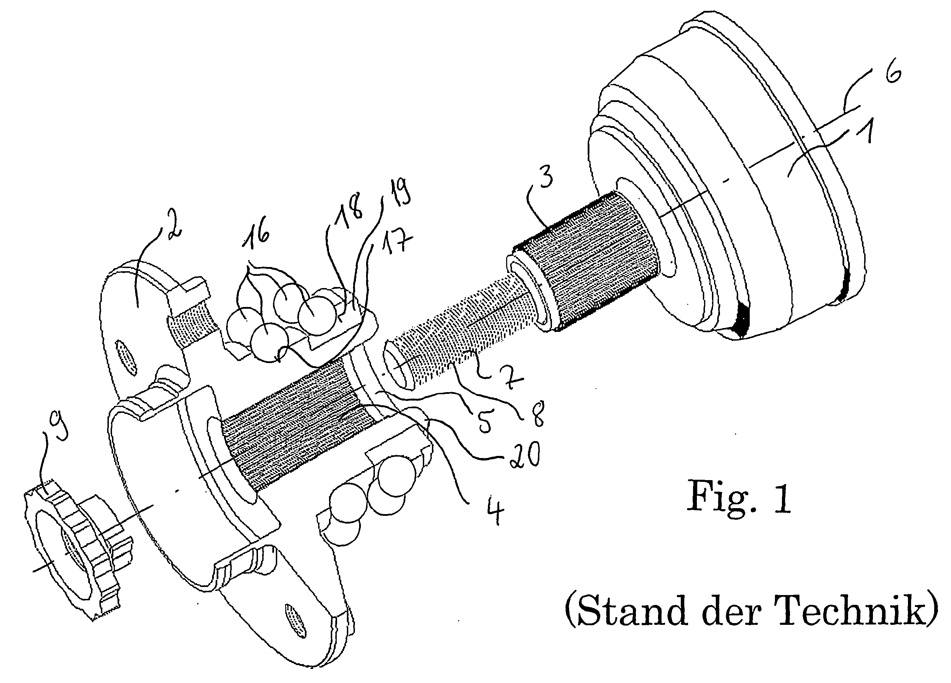

Die Figuren 1 bis 3 dienen der detaillierten Beschreibung des Hintergrundes zur Erfindung:
Figur 1 zeigt ein Antriebselement 1, dass mit einem Flansch 2 zur Aufnahme eines nicht dargestellten Fahrzeugrades verbunden werden soll. Die Drehverbindung zwischen dem Flansch 2 und dem Antriebselement 1 wird mittels ineinander greifender Zähne der Außenverzahnung 3 an einer bolzenartigen Verlängerung des Antriebselementes und einer Innenverzahnung 4 in einem axialen Loch 5 des Flansches hergestellt. Diese Drehverbindung ist jedoch nicht durch reinen Formschluss der ineinander greifenden Verzahnungen 3 und 4 hergestellt, sondern gleichzeitig durch eine Pressverbindung der Verzahnungen 3 und 4, bei denen die ineinander greifenden Zähne sich zumindest teilweise aneinander plastisch verformen.

Der Flansch 2 ist mittels einer Radlagerung um die Längsmittelachse 6 drehbar an einem Fahrzeug gelagert. Radlagerungen weisen in der Regel zwei Reihen von Wälzkörpern auf, die in diesem Ausführungsbeispiel Kugeln 16 sind. Für eine Reihe der Kugeln 16 ist in den Flansch 2 eine Laufbahn 17 eingebracht. Die Laufbahn 18 der anderen Reihe Kugeln 16 ist an einem Innenring 19 ausgebildet, der mittels eines Bördelbordes 20 axial am Flansch 2 gehalten ist.

Ein Verschrauben der Mutter 9 mit dem Bolzen 7 wird in der Regel gleichzeitig die Radlagerung axial über den Bördelbord 20 spielfrei vorgespannt. Zusätzlich ist die Drehverbindung mittels der Mutter 9 axial gegen Lösen gesichert.

Das Antriebselement 1, die Gelenkglocke einer nicht dargestellten Antriebswelle, wird zunächst axial entlang der Längsmittelachse 6 von einer Seite des Flansches 2 aus in das Loch 5 soweit eingeführt, bis die Außenverzahnung 3 und die Innenverzahnung 4 aufeinander treffen. Ein einteilig mit dem Antriebselement 1 ausgebildeter Bolzen 7 ragt dabei an der anderen Seite des Flansches 2 aus dem Loch 5 heraus. Der Bolzen 7 weist ein Außengewinde 8 auf, dass mit einem Innengewinde einer Mutter 9 korrespondiert.

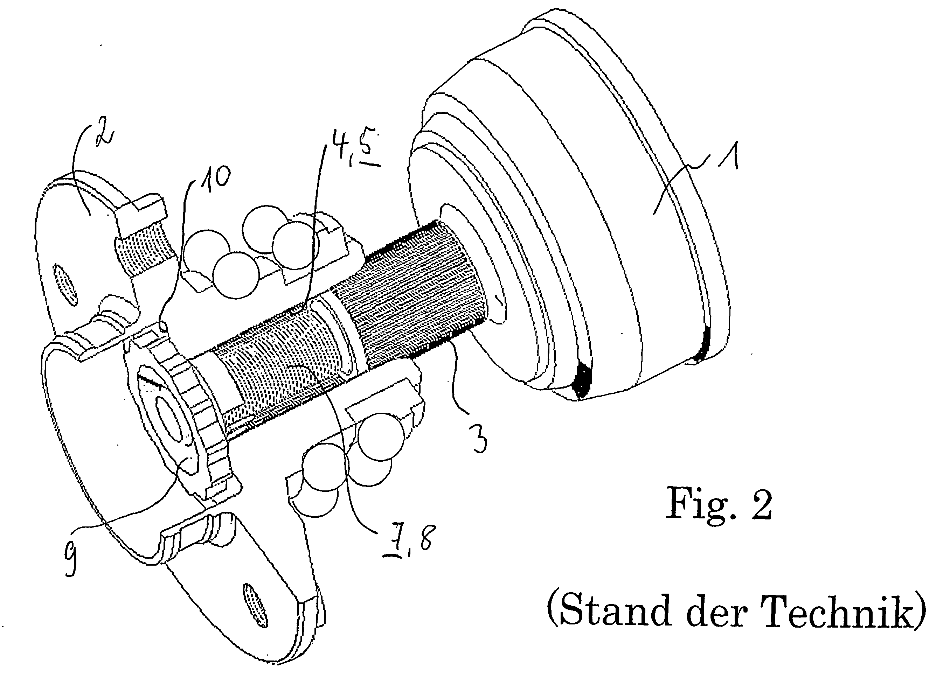

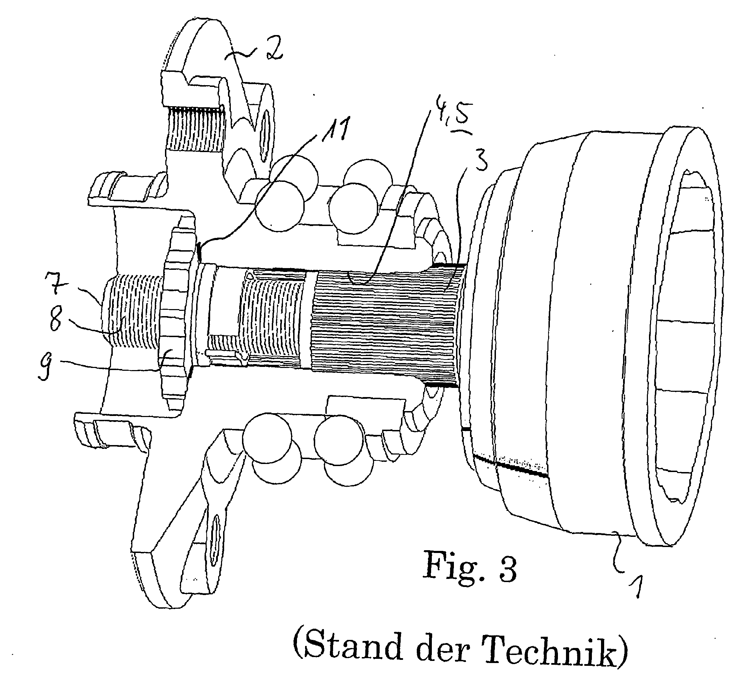

Die Mutter 9 wird im nächsten Schritt des Verfahrens auf das Außengewinde 8 des Bolzens 7 aufgeschraubt. Das Drehen der Mutter 9 auf das Außengewinde 8 kann zunächst nahezu ohne Widerstand vorgenommen werden. Wenn die Mutter 9, wie in Figur 2 dargestellt, axial an der Stützfläche 10 des Flansches 2 anliegt, erhöht sich jedoch das Anzugsmoment an der Mutter 9 gegen den Widerstand der Presspassungen zwischen Innenverzahnung 4 und Außenverzahnung 3. Das axiale Hineinziehen der Außenverzahnung 3 in das Loch 5 ist nur mit hohen Anzugsmomenten an der Mutter 9 möglich. Dabei stützt sich die Mutter 9 axial an der Stützfläche 10 ab. Das Anzugsmoment an der Mutter 9 erhöht sich durch die Reibung an der Anlage 11 zwischen Mutter 9 und Stützfläche 10 (Figur 3).

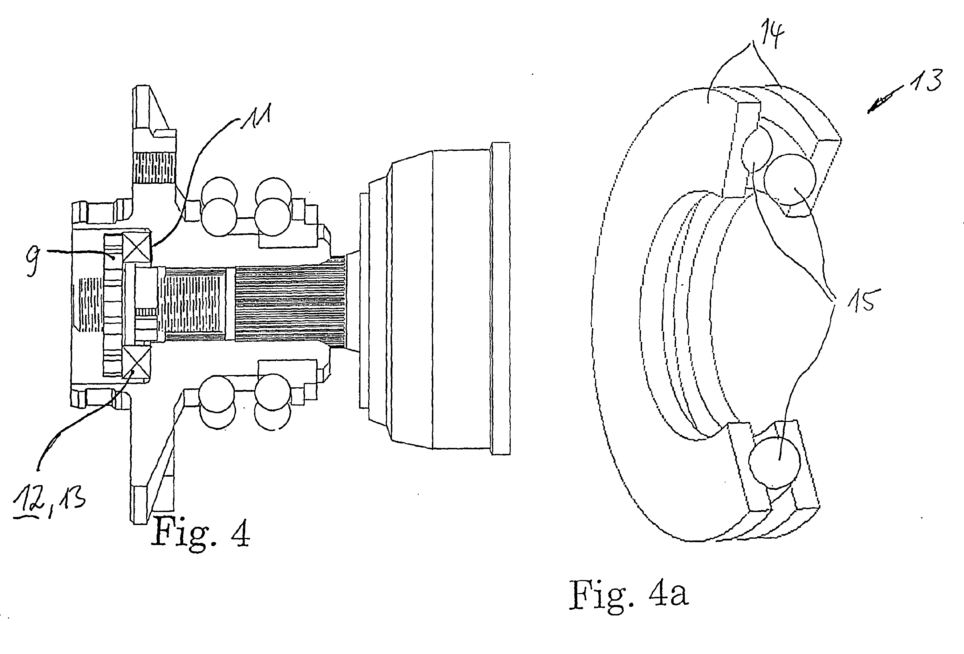

Die Figuren 4 und 4 a zeigen ersten Lösungsansatz, durch den die Reibung an der Anlage 11 zwischen Mutter 9 und Stützfläche 10 mittels eines axialen Lagers 12 reduziert werden kann. Das Lager 12 ist alternativ ein Gleitlager oder, wie in Figur 4a dargestellt, vorzugsweise ein Axialwälzlager 13 aus zwei Axialscheiben 14 sowie Kugeln 15. Nach dem Herstellen der Drehverbindung zwischen dem Flansch 2 und dem Antriebselement 1 wird das Lager 12 alternativ entweder durch Lösen der Mutter 9 entfernt oder verbleibt dauerhaft in der Einheit. Wenn das Lager entfernt wurde, wird die oder eine andere geeignete Mutter wieder auf den Bolzen 7 verschraubt und das System axial mit entsprechenden Anzugsmomenten endgültig vorgespannt.

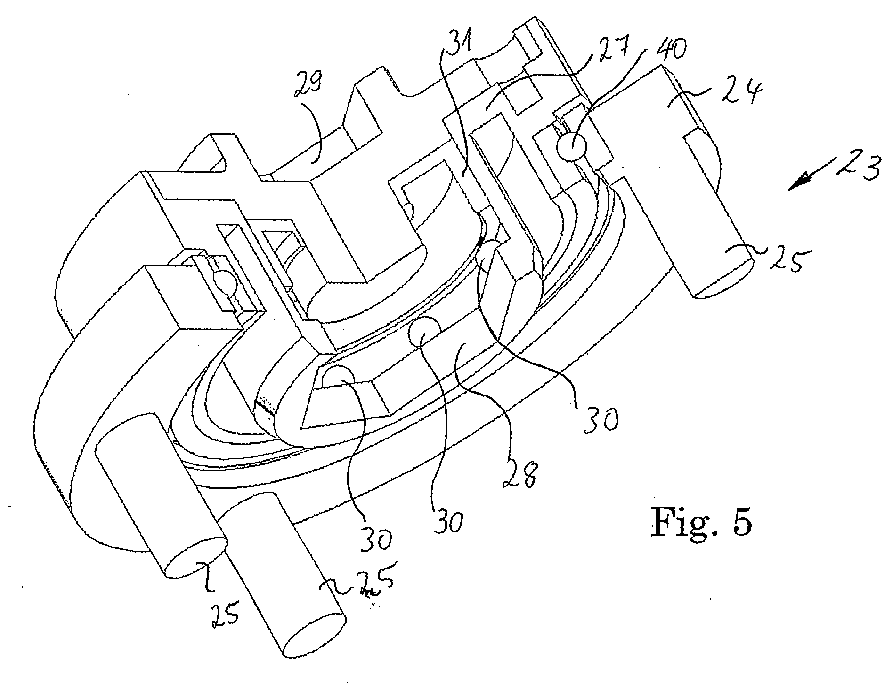

Das Verfahren, die Vorrichtung und eine Mutter zum Herstellen einer Drehverbindung zwischen einem Antriebselement 21 und dem Flansch 2 sind nachfolgend anhand der Figuren 5 bis 13 näher beschrieben.

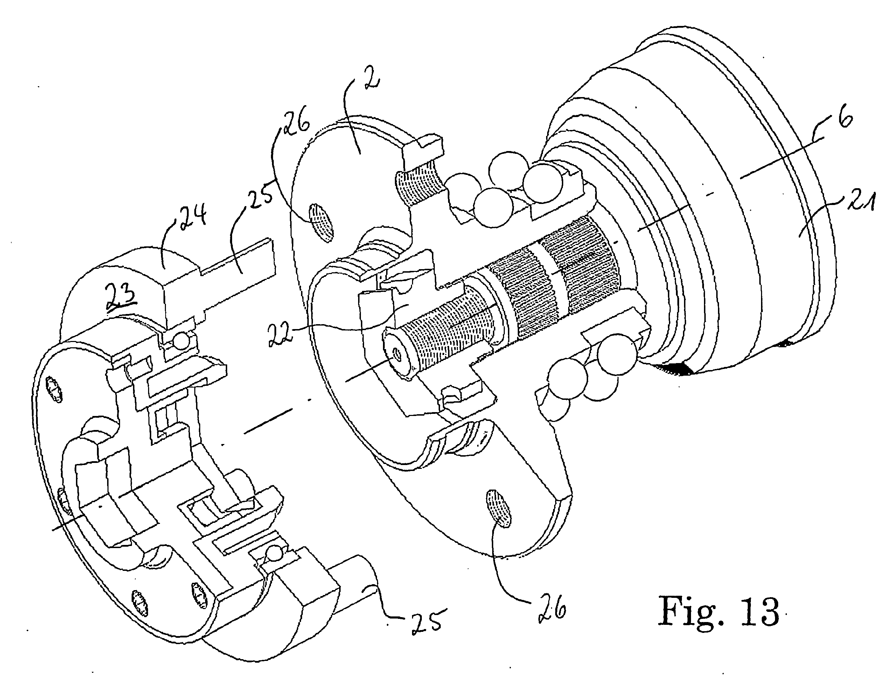

Figur 13 zeigt die fertig hergestellte Drehverbindung zwischen dem Flansch 2 und einem Antriebselement 21. Das Antriebselement 21 ist eine Gelenkglocke eines Gelenkantriebes eines Fahrzeuges. Die Drehverbindung zwischen Antriebselement 21 und dem Flansch 2 ist mittels einer Mutter 22 axial vorgespannt und gesichert. Für das Herstellen der in Figur 13 dargestellten fertigen Verbindung wurde eine Vorrichtung 23 genutzt.

Die Vorrichtung 23 weist einen Stützring 24 auf, von dem axial Führungsbolzen 25 in Richtung des Flansches 2 abgehen. Die Führungsbolzen 25 sind parallel zur Längsmittelachse 6 ausgerichtet und passen in die Durchgangslöcher 26 am Flansch 2. Wie aus Figur 5 ersichtlich ist, ist an dem Stützring 24 ein Klemmverschluss 27 mittels eines Wälzlagers 40 drehbar gelagert. Der Klemmverschluss 27 weist einen Mutternschlüssel 28 in diesem Falle mit einem Innensechskant auf. Die Abmessungen des Mutternschlüssels 28 korrespondieren mit dem Sechskant der Mutter 22.

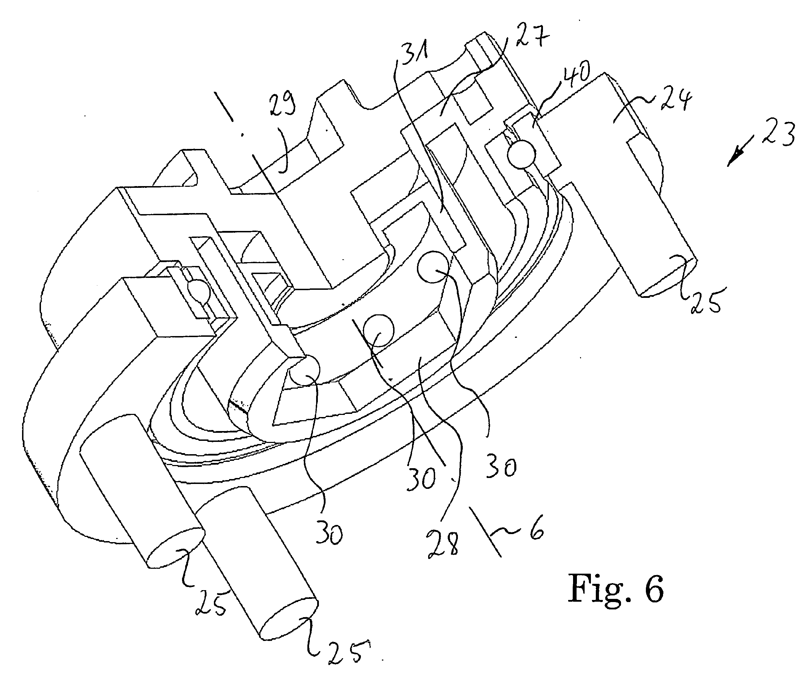

Weiterhin weist der Klemmverschluss 27 einen Innensechskant 29 auf, über den ein Antriebsmoment auf den Mutternschlüssel 28 übertragbar ist. In dem Klemmverschluss 27 sind Klemmkörper als Formelemente 30, in diesem Falle in Form von Kugeln, sowie ein axial beweglicher Klemmring 31 angeordnet. Figur 5 zeigt den Klemmverschluss 27 in gelöster Stellung, d.h. die Formelemente 30 sind radial von dem Klemmring 31 frei. In Figur 6 sind die Formelemente 30 mittels des Klemmringes 31 radial auf die Längsmittelachse 6 zu bewegt.

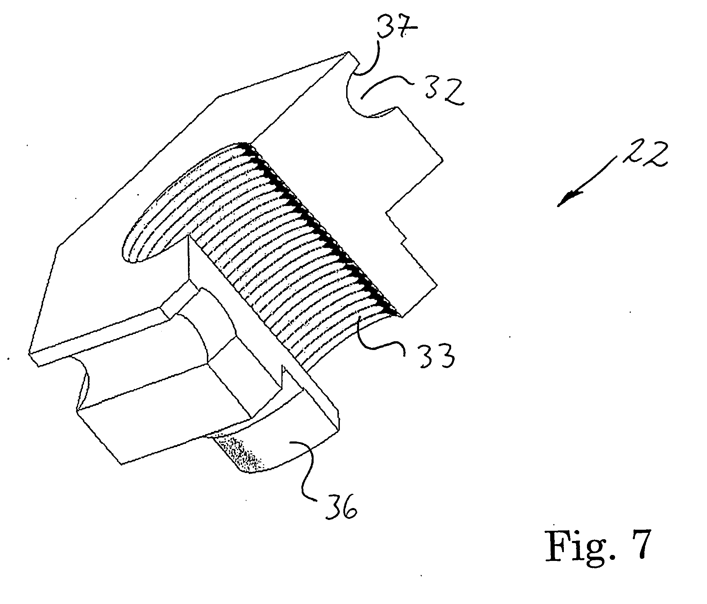

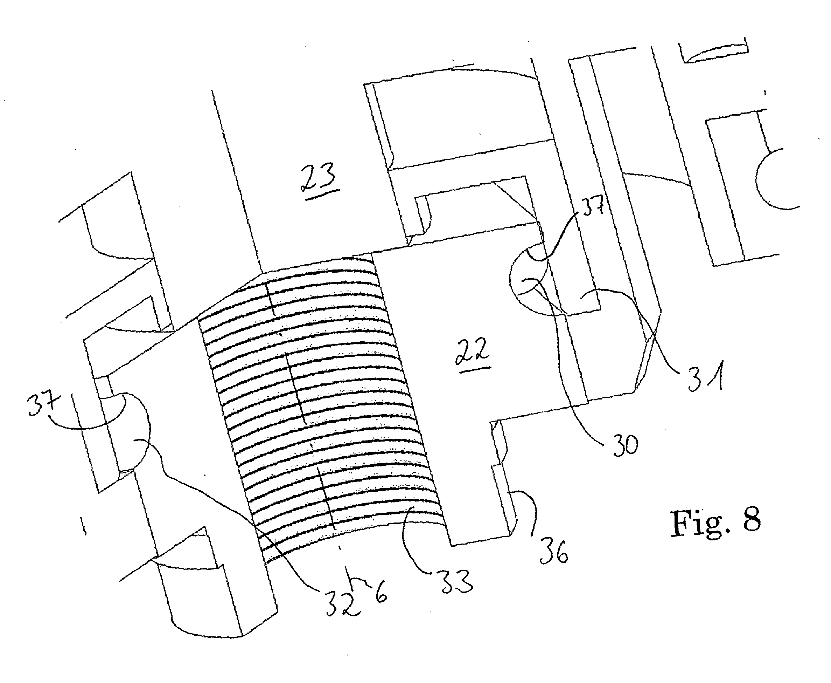

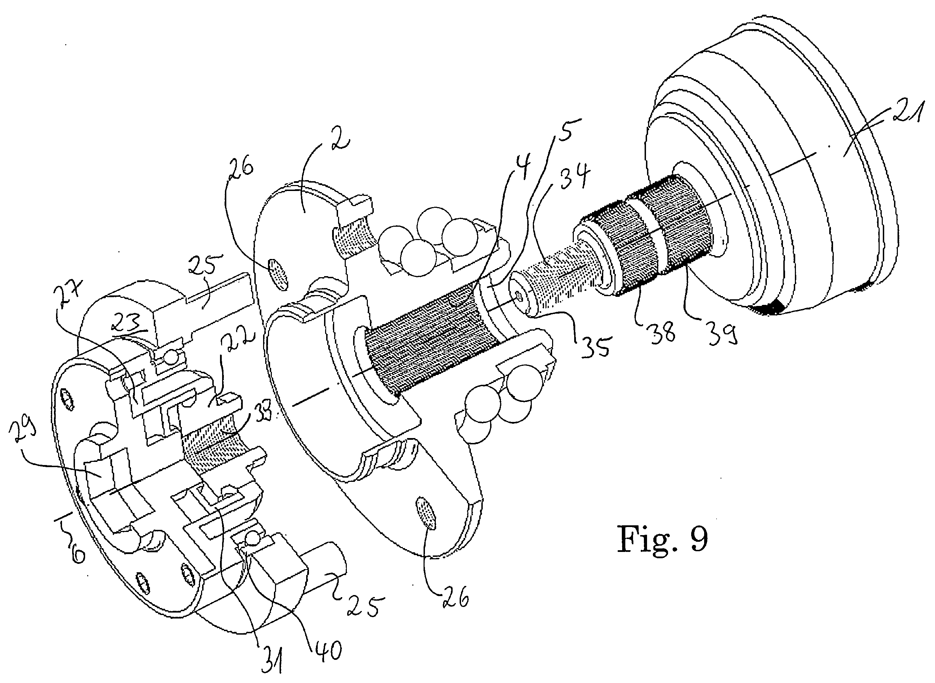

Die Formelemente sind für einen formschlüssigen Eingriff in einer Ringnut 32 an der Mutter 22 vorgesehen. Die Mutter 22 ist in Figur 7 als Einzelteil dargestellt und weist ein Innengewinde 33 auf, dass mit dem Außengewinde 34 des Bolzens 35 am Antriebselement 21 nach Figur 9 korrespondiert. Die Mutter 22 ist mittels eines Schaftes 36 axial verlängert und innen an dem Schaft 36 auch mit dem Innengewinde 33 versehen. Die Mutter ist weiter mittels der Ringnut 32 axial aus Richtung des Flansches 2 so hinterschnitten, dass die Formelemente 30, wie in Figur 8 dargestellt, die Mutter 22 an einer dem Flansch 2 zugewandten Wandung 37 in der Ringnut 32 axial hintergreifen. Als Formelemente sind alternativ zu den Kugeln auch Klemmbacken, radial in die Ringnut eingreifende Klemmnasen oder Spreizringe geeignet. Der Außensechskant der Mutter 22 sitzt in dem Mutternschlüssel 28 und ist mittels der Formelemente 30 axial in der Vorrichtung gehalten.

Die Mutter 22 ist alternativ zu dem Außensechskant mit allen Formen versehen, die geeignet sind um die Längsmittelachse 6 ein Anzugsmoment auf die Mutter 22 zu übertragen. Alternativ ist die Mutter 22 axial so hinterschnitten, dass die Seitenflächen 38 in Richtung des Schaftes 36 und zur Längsmittelachse 6 geneigt abfallen, so dass die Mutter in Richtung des Flansches axial von den Klemmelementen eines Klemmverschluss hintergriffen werden kann.

Das Antriebselement 21 weist, wie in Figur 9 dargestellt, zwei Außenverzahnungen 38 und 39 auf. Zwischen der Innenverzahnung 4 am Flansch und der dem Bolzen 35 am nächsten liegenden Außenverzahnung 38 ist eine spielbehaftete formschlüssige Drehverbindung ohne Presssitz herstellbar. Die Verzahnung 39 und die Innenverzahnung 4 sind jedoch, wie anfangs schon beschrieben, nur über einen Presssitz miteinander form-kraftschlüssig zu verbinden. Diese Verbindung ist durch die Außenverzahnung 39 hergestellt, deren Paarung mit der Innenverzahnung 4 nur durch den anfangs schon beschriebenen Form-Kraftschluss herstellbar ist.

Das einteilig mit dem Bolzen 35 und den Außenverzahnungen 38 sowie 39 ausgebildete Antriebselement 21 wird axial entlang der Längsmittelachse 6 in das Loch 5 eingeführt. Dabei greifen die Innenverzahnung 4 und die Außenverzahnung 38 formschlüssig ineinander. Die Bearbeitungszeiten für das Einziehen der bolzenartigen Verlängerung des Antriebselementes 21 sind vorteilhaft verkürzt da sich das Gewinde 38 zunächst ohne nennenswerten Widerstand einziehen lässt. Der Weg, um den die Verlängerung gegen den Widerstand des Form-Kraftschlusses eingezogen werden muss, ist somit vorteilhaft um die axiale Länge der Außenverzahnung 38 verkürzt. Damit ist die axiale Länge des Bolzens 35 kürzer. Außerdem steht das freie Ende des Bolzens 35 nach dem Herstellen der Drehverbindung axial nicht soweit aus dem Loch 5 und über die Mutter 22 hinaus. Durch die insgesamt kürzere bolzenartige Verlängerung des Antriebselementes 21 ist Material zur Herstellung des Antriebselementes 21 gespart und das Gesamtgewicht der Einheit reduziert.

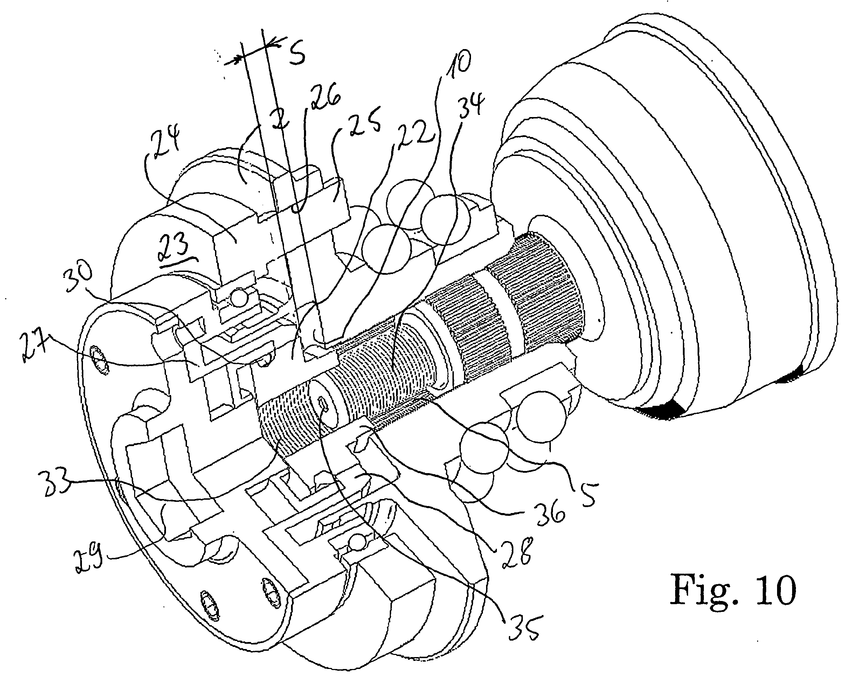

Gemäß der Darstellung nach Figur 10 ist die Vorrichtung 23 zum Flansch 2 positioniert. Dazu werden die Führungsbolzen 25 des Stützringes 24 in die Durchgangslöcher 26 gesteckt. Der Stützring 24 ist somit verdrehfest mit dem Flansch 2 formschlüssig gekuppelt. Ein nicht weiter dargestellter Sechskant eines Schraubwerkzeuges greift in den Innensechskant 29 ein. Drehbewegung des Schraubwerkzeuges werden auf den Mutternschlüssel 28 übertragen. Mittels dieser Drehbewegungen bzw. Drehmomente wird die Mutter 22 auf das Außengewinde 34 aufgeschraubt. Der Schaft 36 der Mutter taucht dabei axial in das Loch 5 ein, so dass das Innengewinde 33 der Mutter 22 frühzeitig auf dem Außengewinde 34 greift. Mittels dieser axialen Verlängerung des Innengewindes 33 der Mutter kann die axiale Länge des Bolzens 35 kürzer gehalten werden. Außerdem ist die Anzahl der tragenden Windungen in der Gewindepaarung, die für die folgenden hohen Belastungen aus Anzugsmomenten notwendig ist, frühzeitig hergestellt.

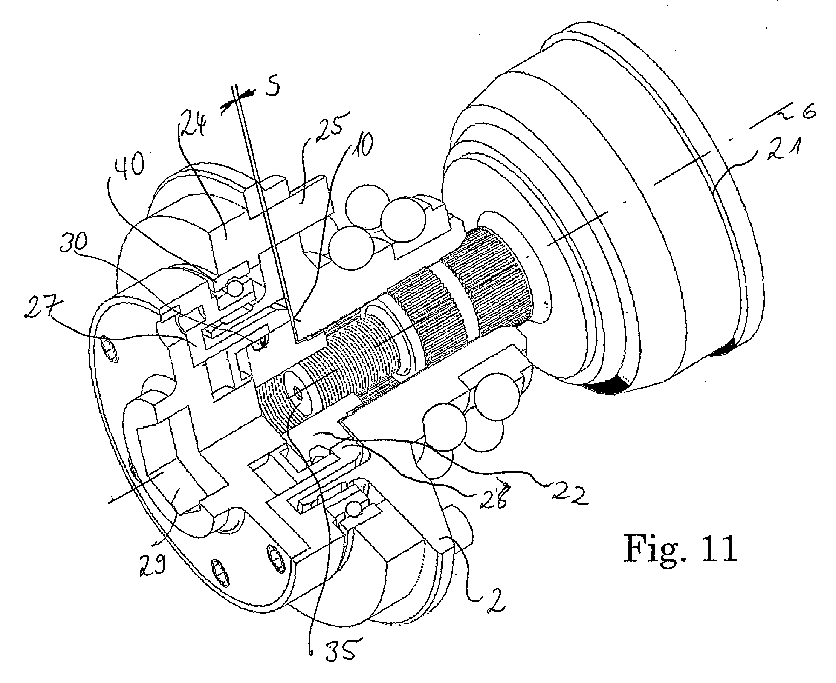

Die Anzugsmomente um die Längsmittelachse 6 werden vom Innensechskant 29 auf den Mutternschlüssel 28 und somit auf die Mutter 22 übertragen. Dabei wird die Mutter axial mittels der durch den Klemmverschluss 27 betätigten Formelemente 30 axial um das Spaltmaß S zu der Stützfläche 10 beabstandet gehalten (Figur 11). Der Klemmverschluss 27 mit dem Mutterschlüssel 28 sind dabei axial an dem Wälzlager 40 abgestützt und mittels des Wälzlagers 40 drehbar zum Stützring 24 gelagert. Der Stützring 24 ist mittels der Führungsbolzen 25 zum Flansch 2 drehfest. Das Drehen der Mutter 22 führt zum Verschrauben der Mutter 22 mit dem Bolzen 35 - solange bis das Antriebselement 21 in seiner Endstellung zum Flansch 2 steht.

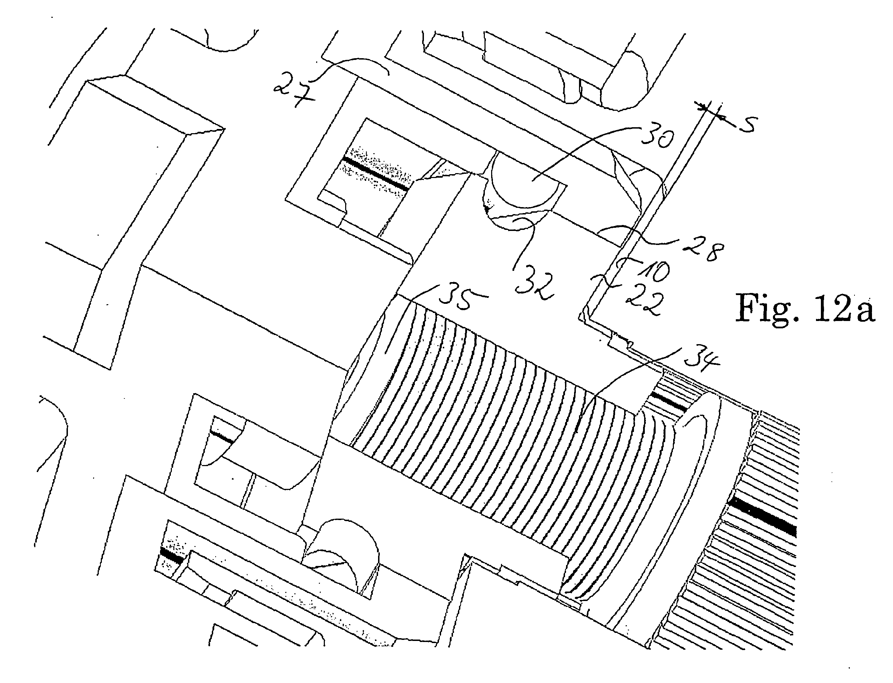

Wenn das Antriebselement 21 seine Endstellung zum Flansch 2 erreicht hat, erhöht sich das Anzugsmoment an der Mutter 22. Dieses Anzugsmoment kann mittels eines Sollwertes vorbestimmt und überwacht werden. Steigt das Anzugsmoment auf diesen Sollwert an, veranlasst ein Steuersignal der Klemmverschluss 27 die Mutter 22 axial freizugeben (Figur 12a). Dabei wird die formschlüssige Verbindung zwischen den Formelementen 30 und der Ringnut 32 aufgehoben.

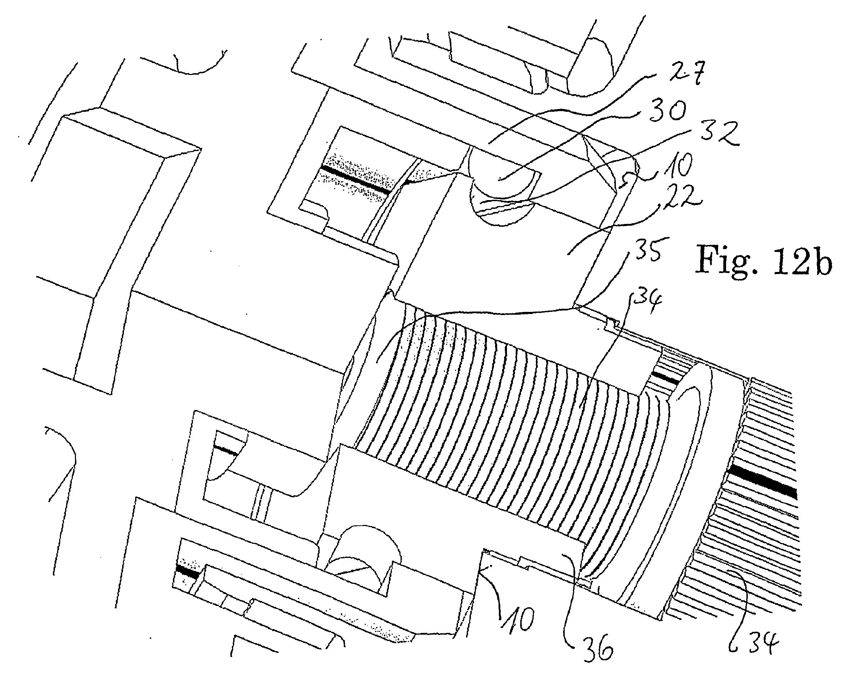

Durch anschließendes weiteres Drehen des Mutternschlüssels 28 wird das Spaltmaß S solange überwunden, bis die Mutter 22 axial an der Stützfläche 10 anliegt und das für die Verspannung der Radlagerung notwendige Anzugsmoment an der Mutter 22 erreicht ist (Figur 12b). Nach dem Erreichen des Sollwertes wird die Vorrichtung, wie in Figur 13 dargestellt, axial vom Flansch 2 und der fertig montierten Einheit abgezogen.

### Bezugszeichen

- 1: Antriebselement
- 2: Flansch
- 3: Außenverzahnung
- 4: Innenverzahnung
- 5: Loch
- 6: Längsmittelachse
- 7: Bolzen
- 8: Außengewinde
- 9: Mutter
- 10: Stützfläche
- 11: Anlage
- 12: Lager
- 13: Axialwälzlager
- 14: Axialscheiben
- 15: Kugeln
- 16: Kugeln
- 17: Laufbahn
- 18: Laufbahn
- 19: Innenring
- 20: Bördelbord
- 21: Antriebselement
- 22: Mutter
- 23: Vorrichtung
- 24: Stützring
- 25: Führungsbolzen
- 26: Durchgangsloch
- 27: Klemmverschluss
- 28: Mutternschlüssel
- 29: Innensechskant
- 30: Formelement
- 31: Klemmring
- 32: Ringnut
- 33: Innengewinde
- 34: Außengewinde
- 35: Bolzen
- 36: Schaft
- 37: Wandung
- 38: Außenverzahnung
- 39: Außenverzahnung
- 40: Wälzlager

## Patentansprüche

1. Verfahren zum Herstellen einer Drehverbindung zwischen einem Antriebselement (1, 21) und einem Flansch (2), bei dem das Antriebselement (1, 21) und der Flansch (2) zumindest durch eine erste Mutter (22) und durch einen Bolzen (7, 35) des Antriebselementes (1, 21) zumindest solange miteinander verschraubt werden, bis der Bolzen (7, 35) durch Drehen der ersten Mutter (22) axial in ein Loch (5) des Flansches (2) bis in eine Endstellung des Antriebselementes (1, 21) zu dem Flansch (2) hineingezogen ist, das Verfahren mit den Schritten
- Einführen des Bolzens (7, 35) in ein axiales Loch (5) des Flansches (2), von einer axialen Seite des Flansches (2) aus, bis eine lockere Schraubverbindung zwischen dem Bolzen (7, 35) und der ersten Mutter (22) herstellbar ist, wobei die erste Mutter (22) an einer der axialen Seite axial abgewandten Seite des Flansches (2) dem Flansch (2) axial gegenüberliegt,
- Aufsetzen der ersten Mutter (22) auf den Bolzen (7, 35) sowie
- Verschrauben der ersten Mutter (22) mit dem Bolzen (7, 35) und dabei axiales Hineinziehen des Bolzens (7, 35) in das Loch (5) durch Drehen der ersten Mutter (22),
**dadurch gekennzeichnet, dass** die auf den Bolzen (7, 35) aufgesetzte erste Mutter (22) beim Hineinziehen des Bolzens (7, 35) in das Loch (5) zu dem Flansch (2) axial beabstandet gehalten wird und dabei die Mutter (22) frühestens erst am Flansch (2) anliegt, wenn das Antriebselement (1, 21) durch Drehen der ersten Mutter (22) die Endposition zum Flansch (2) eingenommen hat.

2. Verfahren nach Anspruch 1, **dadurch gekennzeichnet, dass** die erste Mutter (22) solange axial zu dem Flansch (2) beabstandet gehalten wird, bis das Antriebselement (1, 21) in der Endposition zu dem Flansch (2) steht und dass dann die erste Mutter (22) mit dem Bolzen (7, 35) solange verschraubt wird, bis die Mutter (22) axial gegen den Flansch (2) vorgespannt ist.

3. Verfahren nach Anspruch 1, **dadurch gekennzeichnet, dass** die erste Mutter (22) solange axial zu dem Flansch (2) beabstandet gehalten wird, bis das Antriebselement (1, 21) in der Endposition zu dem Flansch (2) steht und dass dann die erste Mutter (22) zunächst in axiale Richtung freigegeben wird und schließlich die erste Mutter (22) mit dem Bolzen (7, 35) solange verschraubt wird, bis die Mutter (22) axial gegen den Flansch (2) vorgespannt ist.

4. Verfahren nach Anspruch 1, **dadurch gekennzeichnet, dass** die erste Mutter (22) solange zu dem Flansch (2) axial beabstandet gehalten wird, bis ein durch einen ersten Sollwert definiertes Anzugsmoment an der Mutter (22) erreicht ist.

5. Verfahren nach Anspruch 1, **dadurch gekennzeichnet, dass** in einem weiteren Verfahrensschritt die Mutter (22) solange axial gegen den Flansch (2) vorgespannt wird, bis ein durch einen zweiten Sollwert definiertes Anzugsmoment an der Mutter (22) erreicht ist.

6. Verfahren nach Anspruch 1, **dadurch gekennzeichnet, dass** die erste Mutter (22) mittels einer Vorrichtung (23) zu dem Flansch (2) axial beabstandet gehalten wird.

7. Verfahren nach Anspruch 6, **dadurch gekennzeichnet, dass** die erste Mutter (22) mittels der Vorrichtung (23) zumindest solange gedreht wird, bis das Antriebselement (1, 21) in der Endposition steht.

8. Verfahren nach Anspruch 6, **dadurch gekennzeichnet, dass** die erste Mutter (22) mittels der Vorrichtung (23) solange zu dem Flansch (2) axial beabstandet gehalten wird, bis ein durch einen ersten Sollwert definiertes Anzugsmoment an der Mutter (22) erreicht ist und dass die erste Mutter (22) bis zum Erreichen des ersten Sollwertes mittels der Vorrichtung (23) gedreht wird.

9. Verfahren nach Anspruch 8, **dadurch gekennzeichnet, dass** die erste Mutter (22) mittels der Vorrichtung (23) mit dem Bolzen (7, 35) solange verschraubt wird, bis die erste Mutter (22) axial gegen den Flansch (2) vorgespannt und der zweite Sollwert erreicht ist.

10. Verfahren nach Anspruch 7, 8 oder 9, **dadurch gekennzeichnet, dass** die Vorrichtung (23) zumindest axial an dem Flansch (2) abgestützt und dann mit der ersten Mutter (22) lösbar gekoppelt wird, wobei sich die erste Mutter (22) relativ zum Flansch (2) drehbar an der Vorrichtung (23) abstützt.

11. Vorrichtung zum Montieren einer drehfesten Verbindung zwischen einem Antriebselement (1, 21) und einem Flansch (2), wobei der Flansch und das Antriebselement (1, 21) axial in ein Loch (5) des Flansches (2) zumindest durch Drehen einer Mutter (22) auf einem Bolzen (7, 35) des Antriebselementes (1, 21) solange mittels der Vorrichtung (23) miteinander verschraubt werden, bis der Bolzen (7, 35) axial in eine Endstellung zu dem Flansch (2) in den Flansch (2) hineingezogen ist, wobei die Vorrichtung (23) einen drehbaren Mutternschlüssel (28) für einen drehbaren Formschluss mit der Mutter (22) aufweist, **dadurch gekennzeichnet, dass**
- die Vorrichtung (23) wenigstens einen verschließbaren sowie wieder zu öffnenden Klemmverschluss (27) aufweist, wobei der Klemmverschluss (27) die Mutter (22) zumindest radial umgreift,
- der Klemmverschluss (27) zumindest axial mit einem in Richtung des Flansches (2) weisenden axialen Hinterschnitt der Mutter (22) korrespondiert, dass
- der Klemmverschluss (27) mit der Mutter an dem Hinterschnitt zwischen Hinterschnitt und Flansch (2) formschlüssig koppelbar und wieder lösbar ist, und dass.
- die mit der Vorrichtung (23) formschlüssig gekoppelte Mutter (22) axial relativ zu dem Flansch (2) mit einem Abstand von größer 0 mm sowie relativ zu dem Flansch (2) drehbar in der Vorrichtung (23) gehalten und dabei an dem Flansch (2) axial abgestützt ist.

12. Vorrichtung (23) nach Anspruch 11, **dadurch gekennzeichnet, dass** die von dem Formelement gelöste Mutter (22) mittels des Mutternschlüssels (28) drehbar ist und dabei die Mutter (22) in der Vorrichtung (23) axial in Richtung des Flansches (2) beweglich geführt ist.

13. Vorrichtung (23) nach Anspruch 11, **dadurch gekennzeichnet, dass** die Vorrichtung (23) beim Montieren der drehfesten Verbindung relativ mit dem Flansch (2) verdrehfest gekoppelt ist.

14. Verschraubung zum Verbinden eines Flansches (2) mit einem Antriebselement (1, 21) einer Antriebswelle mittels der Vorrichtung (23) nach einem der Ansprüche 11 bis 13, wobei das Antriebselement (1, 21) und der Flansch zumindest durch eine Mutter (22) und einen Bolzen (7, 35) an dem Antriebselement (1, 21) miteinander verschraubt sind, **dadurch gekennzeichnet, dass** die Mutter (22) zumindest an einem Abschnitt axial aus Richtung des Flansches (2) hinterschnitten ist, wobei der Abschnitt axial zu dem Flansch (2) beabstandet ist.

15. Verschraubung nach Anspruch 14, **dadurch gekennzeichnet, dass** die Mutter (22) mittels wenigsten einer radialen Vertiefung hinterschnitten ist.

16. Verschraubung nach Anspruch 15, **dadurch gekennzeichnet, dass** die Mutter (22) mit wenigstens einer Ringnut (32) hinterschnitten ist.

17. Verschraubung nach Anspruch 15, **dadurch gekennzeichnet, dass** der Bolzen (7, 35) ein Außengewinde (8, 34) und die Mutter (22) ein mit dem Außengewinde (8, 34) korrespondierendes Innengewinde (33) aufweist, wobei die Mutter (22) an einer radial von dem Innengewinde (33) abgewandten Außenseite hinterschnitten ist.

## Claims

1. Method for producing a rotary joint between a drive element (1, 21) and a flange (2), in which the drive element (1, 21) and the flange (2) are screwed to one another at least by a first nut (22) nut and by a bolt (7, 35) of the drive element (1, 21) at least until the bolt (7, 35) is by rotation of the first nut (22) drawn axially into a hole (5) of the flange (2) as far as an end position of the drive element (1, 21) in relation to the flange (2), the method having the steps
- introduction of the bolt (7, 35) into an axial hole (5) of the flange (2) from one axial side of the flange (2) until a loose screwed joint can be produced between the bolt (7, 35) and the first nut (22), the first nut (22) lying opposite the flange (2) axially on a side of the flange (2) facing away axially from the axial side;
- mounting the first nut (22) onto the bolt (7, 35), and
- screwing the first nut (22) together with the bolt (7, 35) and in so doing drawing the bolt (7, 35) axially into the hole (5) by rotating the first nut (22),
**characterized in that** the first nut (22) mounted onto the bolt (7, 35) is kept spaced axially in relation to the flange (2) during drawing of the bolt (7, 35) into the hole (5) and in this connection the nut (22) bears against the flange (2) at the earliest when the drive element (1, 21) has occupied the end position in relation to the flange (2) by virtue of rotation of the first nut (22).

2. Method according to Claim 1, **characterized in that** the first nut (22) is kept spaced axially in relation to the flange (2) until the drive element (1, 21) is located in the end position in relation to the flange (2) and **in that** the first nut (22) is then screwed together with the bolt (7, 35) until the nut (22) is prestressed axially against the flange (2).

3. Method according to Claim 1, **characterized in that** the first nut (22) is kept spaced axially in relation to the flange (2) until the drive element (1, 21) is located in the end position in relation to the flange (2) and **in that** the first nut (22) is then first released in the axial direction and finally the first nut (22) is screwed to the bolt (7, 35) until the nut (22) is prestressed axially against the flange (2).

4. Method according to Claim 1, **characterized in that** the first nut (22) is kept spaced axially in relation to the flange (2) until a tightening torque on the nut (22) defined by a first desired value is reached.

5. Method according to Claim 1, **characterized in that** in a further method step the nut (22) is prestressed axially against the flange (2) until a tightening torque on the nut (22) defined by a second desired value is reached.

6. Method according to Claim 1, **characterized in that** the first nut (22) is kept spaced axially in relation to the flange (2) by means of a device (23).

7. Method according to Claim 6, **characterized in that** the first nut (22) is rotated by means of the device (23) at least until the drive element (1, 21) is located in the end position.

8. Method according to Claim 6, **characterized in that** the first nut (22) is kept spaced axially in relation to the flange (2) by means of the device (23) until a tightening torque on the nut (22) defined by a first desired value is reached and **in that** the first nut (22) is rotated by means of the device (23) until the first desired value is reached.

9. Method according to Claim 8, **characterized in that** the first nut (22) is screwed together with the bolt (7, 35) by means of the device (23) until the first nut (22) is prestressed axially against the flange (2) and the second desired value is reached.

10. Method according to Claim 7, 8 or 9, **characterized in that** the device (23) is supported at least axially on the flange (2) and is then coupled releasably to the first nut (22), the first nut (22) being supported on the device (23) rotatably relative to the flange (2).

11. Device for assembling a rotationally fixed joint between a drive element (1, 21) and a flange (2), the flange and the drive element (1, 21) being screwed with one another axially into a hole (5) of the flange (2) at least by rotation of a nut (22) on a bolt (7, 35) of the drive element (1, 21) by means of the device (23) until the bolt (7, 35) has been drawn into the flange (2) axially into an end position in relation to the flange (2), the device (23) having a rotatable wrench (28) for a rotatable positive connection to the nut (22), **characterized in that**
- the device (23) has at least one closable clamping lock (27) which can be opened again, the clamping lock (27) surrounding the nut (22) at least radially;
- the clamping lock (27) corresponds at least axially to an axial undercut of the nut (22) facing in the direction of the flange (2),
- the clamping lock (27) can at the undercut be coupled positively to the nut and released from it again between undercut and flange (2), and
- the nut (22) coupled positively to the device (23) is held axially relative to the flange (2) with a spacing of greater than 0 mm and also rotatably relative to the flange (2) in the device (23) and is at the same time supported axially on the flange (2).

12. Device (23) according to Claim 11, **characterized in that** the nut (22) released from the shaped element can be rotated by means of the wrench (28) and at the same time the nut (22) is movably guided axially in the device (23) in the direction of the flange (2).

13. Device (23) according to Claim 11, **characterized in that** the device (23) is coupled in a rotationally fixed manner relative to the flange (2) during assembly of the rotationally fixed joint.

14. Screwed joint for connecting a flange (2) to a drive element (1, 21) of a drive shaft by means of the device (23) according to one of Claims 11 to 13, the drive element (1, 21) and the flange being screwed together at least by a nut (22) and a bolt (7, 35) on the drive element (1, 21), **characterized in that** the nut (22) is undercut axially at least on a portion from the direction of the flange (2), the portion being spaced axially in relation to the flange (2).

15. Screwed joint according to Claim 14, **characterized in that** the nut (22) is undercut by means of at least one radial recess.

16. Screwed joint according to Claim 15, **characterized in that** the nut (22) is undercut with at least one annular groove (32).

17. Screwed joint according to Claim 15, **characterized in that** the bolt (7, 35) has an external thread (8, 34) and the nut (22) has an internal thread (33) corresponding to the external thread (8, 34), the nut (22) being undercut on an outer side facing away radially from the internal thread (33).

## Revendications

1. Procédé de fabrication d'un raccord tournant entre un élément d'entraînement (1, 21) et une bride (2), dans lequel l'élément d'entraînement (1, 21) et la bride (2) sont vissés l'un à l'autre au moins par un premier écrou (22) et par un boulon (7, 35) de l'élément d'entraînement (1, 21) au moins jusqu'à ce que le boulon (7, 35) soit serré par rotation du premier écrou (22) axialement dans un trou (5) de la bride (2) jusqu'à une position d'extrémité de l'élément d'entraînement (1, 21) par rapport à la bride (2), le procédé comprenant les étapes suivantes :
- insertion du boulon (7, 35) dans un trou axial (5) de la bride (2), depuis un côté axial de la bride (2), jusqu'à ce qu'un raccord vissé lâche entre le boulon (7, 35) et le premier écrou (22) puisse être obtenu, le premier écrou (22) étant axialement en regard de la bride (2) au niveau d'un côté de la bride (2) axialement opposé au côté axial,
- positionnement du premier écrou (22) sur le boulon (7, 35), et
- vissage du premier écrou (22) avec le boulon (7, 35) et serrage axial du boulon (7, 35) dans le trou (5) par rotation du premier écrou (22),
**caractérisé en ce que** le premier écrou (22) positionné sur le boulon (7, 35), lors du serrage du boulon (7, 35) dans le trou (5), est maintenu axialement espacé par rapport à la bride (2) et l'écrou (22) s'appliquant alors contre la bride (2) au plus tôt dès que l'élément d'entraînement (1, 21) par rotation du premier écrou (22) a atteint la position d'extrémité par rapport à la bride (2).

2. Procédé selon la revendication 1, **caractérisé en ce que** le premier écrou (22) est maintenu espacé axialement par rapport à la bride (2) jusqu'à ce que l'élément d'entraînement (1, 21) soit dans la position d'extrémité par rapport à la bride (2) et **en ce que** le premier écrou (22) est ensuite vissé avec le boulon (7, 35) jusqu'à ce que l'écrou (22) soit précontraint axialement contre la bride (2).

3. Procédé selon la revendication 1, **caractérisé en ce que** le premier écrou (22) est maintenu espacé axialement par rapport à la bride (2) jusqu'à ce que l'élément d'entraînement (1, 21) soit dans la position d'extrémité par rapport à la bride (2) et **en ce que** le premier écrou (22) est alors d'abord libéré dans la direction axiale et le premier écrou (22) est finalement vissé avec le boulon (7, 35) jusqu'à ce que l'écrou (22) soit précontraint axialement contre la bride (2).

4. Procédé selon la revendication 1, **caractérisé en ce que** le premier écrou (22) est maintenu espacé axialement par rapport à la bride (2) jusqu'à ce qu'un couple de serrage appliqué à l'écrou (22) et défini par une première valeur de consigne soit atteint.

5. Procédé selon la revendication 1, **caractérisé en ce que** dans une étape de procédé supplémentaire, l'écrou (22) est précontraint axialement contre la bride (2) jusqu'à ce qu'un couple de serrage appliqué à l'écrou (22) et défini par une deuxième valeur de consigne soit atteint.

6. Procédé selon la revendication 1, **caractérisé en ce que** le premier écrou (22) est maintenu espacé axialement par rapport à la bride (2) au moyen d'un dispositif (23).

7. Procédé selon la revendication 6, **caractérisé en ce que** le premier écrou (22) est tourné au moyen du dispositif (23) au moins jusqu'à ce que l'élément d'entraînement (1, 21) soit dans la position d'extrémité.

8. Procédé selon la revendication 6, **caractérisé en ce que** le premier écrou (22) est maintenu espacé axialement par rapport à la bride (2) au moyen du dispositif (23) jusqu'à ce qu'un couple de serrage appliqué à l'écrou (22) et défini par une première valeur de consigne soit atteint et **en ce que** le premier écrou (22) est tourné au moyen du dispositif (23) jusqu'à l'obtention de la première valeur de consigne.

9. Procédé selon la revendication 8, **caractérisé en ce que** le premier écrou (22) est vissé au moyen du dispositif (23) avec le boulon (7, 35) jusqu'à ce que le premier écrou (22) soit précontraint axialement contre la bride (2) et que la deuxième valeur de consigne soit atteinte.

10. Procédé selon la revendication 7, 8 ou 9, **caractérisé en ce que** le dispositif (23) est supporté au moins axialement contre la bride (2) et est ensuite accouplé de manière desserrable au premier écrou (22), le premier écrou (22) s'appuyant sur le dispositif (23) de manière à pouvoir tourner par rapport à la bride (2).

11. Dispositif pour monter un raccord solidaire en rotation entre un élément d'entraînement (1, 21) et une bride (2), la bride et l'élément d'entraînement (1, 21) étant vissés l'un à l'autre axialement dans un trou (5) de la bride (2) au moins par rotation d'un écrou (22) sur un boulon (7, 35) de l'élément d'entraînement (1, 21) au moyen du dispositif (23) jusqu'à ce que le boulon (7, 35) soit serré axialement dans la bride (2) dans une position d'extrémité par rapport à la bride (2), le dispositif (23) présentant une clé à écrou rotative (28) pour un engagement positif rotatif avec l'écrou (22), **caractérisé en ce que**
- le dispositif (23) présente au moins une fermeture par serrage (27) pouvant être fermée et à nouveau ouverte, la fermeture par serrage (27) venant en prise au moins radialement autour de l'écrou (22),
- la fermeture par serrage (27) correspond au moins axialement à une contre-dépouille axiale de l'écrou (22) tournée dans la direction de la bride (2),
- la fermeture par serrage (27) peut être accouplée par engagement positif avec l'écrou au niveau de la contre-dépouille entre la contre-dépouille et la bride (2) et peut être à nouveau desserrée, et **en ce que**
- l'écrou (22) accouplé par engagement positif avec le dispositif (23) est supporté axialement par rapport à la bride (2) avec un espacement supérieur à 0 mm et est maintenu de manière à pouvoir tourner par rapport à la bride (2) dans le dispositif (23), et est en l'occurrence supporté axialement sur la bride (2).

12. Dispositif (23) selon la revendication 11, **caractérisé en ce que** l'écrou (22) desserré par l'élément d'engagement peut être tourné au moyen de la clé à écrou (28) et en l'occurrence l'écrou (22) est guidé de manière déplaçable axialement dans le dispositif (23) dans la direction de la bride (2).

13. Dispositif (23) selon la revendication 11, **caractérisé en ce que** le dispositif (23), lors du montage du raccord solidaire en rotation, est accouplé de manière solidaire en rotation par rapport à la bride (2).

14. Vissage pour raccorder une bride (2) à un élément d'entraînement (1, 21) d'un arbre d'entraînement au moyen du dispositif (23) selon l'une quelconque des revendications 11 à 13, dans lequel l'élément d'entraînement (1, 21) et la bride sont vissés l'un à l'autre au moins par un écrou (22) et un boulon (7, 35) sur l'élément d'entraînement (1, 21), **caractérisé en ce que** l'écrou (22) est muni d'une contre-dépouille au moins sur une portion axialement dans la direction de la bride (2), la portion étant espacée axialement par rapport à la bride (2).

15. Vissage selon la revendication 14, **caractérisé en ce que** l'écrou (22) est muni d'une contre-dépouille au moyen d'au moins un renfoncement radial.

16. Vissage selon la revendication 15, **caractérisé en ce que** l'écrou (22) est muni d'une contre-dépouille avec au moins une rainure annulaire (32).

17. Vissage selon la revendication 15, **caractérisé en ce que** le boulon (7, 35) présente un filetage externe (8, 34) et l'écrou (22) présente un filetage interne (33) correspondant au filetage externe (8, 34), l'écrou (22) étant muni d'une contre-dépouille au niveau d'un côté extérieur opposé radialement au filetage interne (33).
